# FASCICULE DE BREVET EUROPEEN

(11) **EP 1 813 515 B1**
(45) Date de publication et mention de la délivrance du brevet: **22.04.2009**
(21) Numéro de dépôt: 07001665.4
(22) Date de dépôt: 26.01.2007
(51) Int. Cl.: B62J 1/00

(54) **Selle de vélo**
Fahrradsattel
Bicycle saddle

(30) Priorité: 27.01.2006 FR 0600770
(43) Date de publication de la demande: 01.08.2007
(73) Titulaire: D.C.P.N. SARL, 14000 CAEN (FR)
(72) Inventeur: Babot, Thierry, 14220 Barbery (FR)
(74) Mandataire: Maillet, Alain

(56) Documents cités:
- DE-C- 689 664
- DE-C- 827 008
- GB-A- 229 525
- US-A- 5 988 740

## Description

La présente invention a pour objet une selle de vélo, notamment une selle de vélos de ville, de sport ou d'appartement.

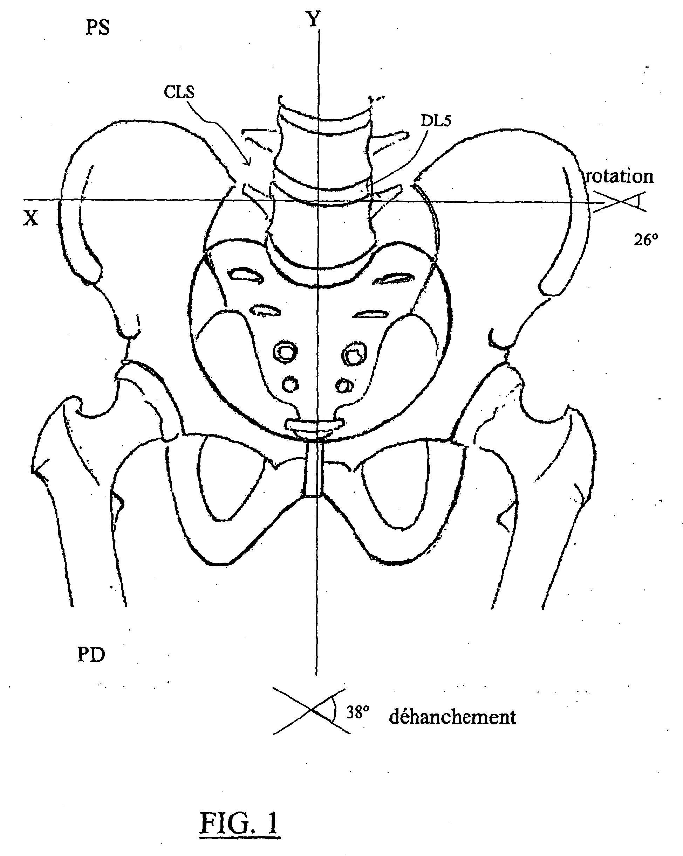

La pratique du vélo occasionne de nombreuses contraintes physiques sur le corps humain. La partie du corps qui supporte le plus grand nombre de ces contraintes est la charnière lombo-sacrée (liaison bassin osseux/axe rachidien). En effet, lors du pédalage, la partie du corps au dessus de la charnière lombo-sacrée est statique, alors que la partie au dessous de la charnière lombo-sacrée est dynamique. La charnière lombo-sacrée est donc le point de rencontre de ces deux phénomènes. Des tests de mesure ont confirmé lors du pédalage une oscillation naturelle compensatoire de la liaison bassin osseux/axe rachidien au niveau du disque lombaire L5 de gauche à droite d'un maximum de 26° par rapport à l'axe horizontal du bassin, en même temps, et de manière synchronisée, qu'une oscillation de haut en bas d'un maximum de 38° par rapport à l'axe transversal du bassin (voir Fig. 1).

Depuis la création du premier vélo, beaucoup d'efforts se sont portés sur l'amélioration du confort de l'utilisateur, notamment du confort au niveau de la selle. Beaucoup de changements ont permis d'améliorer son design et de modifier sa structure. La plupart des selles conventionnelles sont constituées d'une pièce unique et comportent une partie postérieure large sur laquelle l'utilisateur s'assoit et une partie antérieure plus étroite facilitant ainsi le mouvement des jambes lors du pédalage. Le problème des selles conventionnelles est qu'elles ne supportent pas le poids de l'utilisateur de façon efficace, occasionnent des frictions entre la selle et les jambes et ne procurent pas le confort adéquat à une longue utilisation dans le temps. Des selles plus larges ont été réalisées, qui offrent ainsi un plus grand support à l'utilisateur, mais qui réduisent la liberté de mouvement des jambes et génèrent de ce fait beaucoup plus de frictions entre la selle et les jambes.

L'amélioration la plus remarquable du design de la selle réside dans l'utilisation de deux sièges, chacun des sièges supportant un ischion de l'utilisateur. Une grande variété de ce type de selles a été élaborée, parmi laquelle se trouvent les sièges ajustables en largeur et les sièges mobiles indépendamment l'un de l'autre et capables de suivre le mouvement de la jambe. Ce dernier type de selle permet de réduire le phénomène de friction entre le siège et la jambe de l'utilisateur.

Il existe dans l'état de la technique, par exemple, dans les brevets GB-A-229 525 et DE-A-689664, des selles de vélo comportant deux sièges ainsi qu'un système mécanique composé de deux tiges et de deux ressorts respectivement disposés sous les deux sièges et permettant un mouvement de translation des deux sièges du fait du mouvement de l'utilisateur. De tels systèmes ne sont toutefois pas entièrement satisfaisants car ils n'accompagnent pas le mouvement de l'utilisateur de façon suffisante.

Il ressort ainsi de l'état de la technique, qu'il n'existe pas de selles permettant à la fois de réduire les frottements et de diminuer la contrainte physique exercée sur la charnière lombo-sacrée, de manière à procurer un confort maximal à l'utilisateur, puisque tous les efforts d'amélioration du confort se sont portés uniquement sur la réduction des frictions s'exerçant entre les sièges et les jambes.

La présente invention se propose de résoudre ce problème en fournissant une selle articulée capable de limiter les contraintes exercées sur le corps de l'utilisateur tout en assurant un confort au niveau de l'assise, quelle que soit la configuration du terrain.

A cet effet, la selle articulée selon l'invention est du type qui comporte deux sièges et est remarquable en ce que lesdits sièges sont reliés l'un à l'autre par un système mécanique prévu pour que lesdits sièges se déplacent selon un mouvement en translation alterné dans une direction de translation sensiblement normale au plan contenant lesdits sièges, ledit système mécanique étant prévu pour être monté sur ledit vélo de manière à ce que ladite direction de translation soit inclinée de 33° vers l'avant du vélo par rapport à la verticale du vélo.

Ce mécanisme permet ainsi une automatisation de la course naturelle du déhanchement et de la rotation du bassin osseux de l'utilisateur et donc une diminution des contraintes physiques exercées sur le corps, permettant ainsi d'atteindre un équilibre biomécanique.

Selon une caractéristique de l'invention, ledit système mécanique est constitué de deux pistons coulissants dans des directions parallèles entre elles et ladite direction de translation, et qui sont reliés l'un à l'autre par l'intermédiaire d'une bielle articulée en son centre selon un axe normal au plan contenant les deux pistons.

Selon une autre caractéristique de l'invention, ledit système mécanique comporte une butée prévue pour arrêter ladite bielle de manière à limiter le mouvement en translation alterné des deux sièges.

Selon une autre caractéristique de l'invention, ledit système mécanique comporte un moyen de rappel des sièges en une position de repos.

Avantageusement, ledit moyen de rappel des sièges en une position de repos est constitué d'un ressort.

Selon une autre caractéristique de l'invention, la selle comporte un système mécanique permettant un mouvement de rotation des deux sièges autour d'un axe transversal et perpendiculaire à ladite direction de translation.

Selon une autre caractéristique de l'invention, chaque siège comporte un ressort permettant le rappel du siège en une position de repos.

Avantageusement, ledit ressort permettant le rappel du siège en une position de repos est entouré d'une gaine de protection.

Selon une caractéristique de l'invention, chaque siège comporte plusieurs points d'appui.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente une coupe transversale vue de face du bassin osseux,
La Fig. 2 est une coupe transversale vue de derrière du système mécanique de la selle articulée selon l'invention en une position de repos,
La Fig. 3 est une coupe transversale vue de derrière du système mécanique de la selle articulée selon l'invention, montrant la position haute d'un siège et la position basse de l'autre siège selon un mode de réalisation de l'invention,
La Fig. 4A est une vue du dessus des sièges de la selle et la Fig. 4B est une vue de côté du montage sur le vélo du système mécanique de la selle articulée selon l'invention,
La Fig. 5 est une vue du dessus du siège,
   Le tableau 1, page 8, représente une série de mesures des angles de rotation et de déhanchement du bassin osseux effectuée sur un utilisateur d'un vélo muni de la selle selon l'invention,
Les Figs. 6A à G illustrent les valeurs des mesures du tableau 1.
La Fig.7 représente une coupe transversale d'un siège de la selle selon le plan VII-VII, et
La Fig.8 représente une coupe transversale d'un siège de la selle selon le plan VIII-VIII.

La Fig. 1 montre la charnière lombo-sacrée CLS, la partie du corps qui subit le plus de contraintes physiques lors du pédalage. Elle représente la jonction entre la partie supérieure du corps qui est statique PS et la partie inférieure du corps qui est dynamique PD. Le pédalage entraîne la rotation gauche/droite selon l'axe Y du bassin au niveau du disque lombaire DL5 selon un angle maximum de 26°, ainsi qu'un déhanchement haut/bas selon un axe perpendiculaire au plan de la Fig. 1 selon un angle maximum de 38°. Le mécanisme de la selle articulée selon la présente invention se propose de diminuer les contraintes exercées sur cette partie du corps CLS.

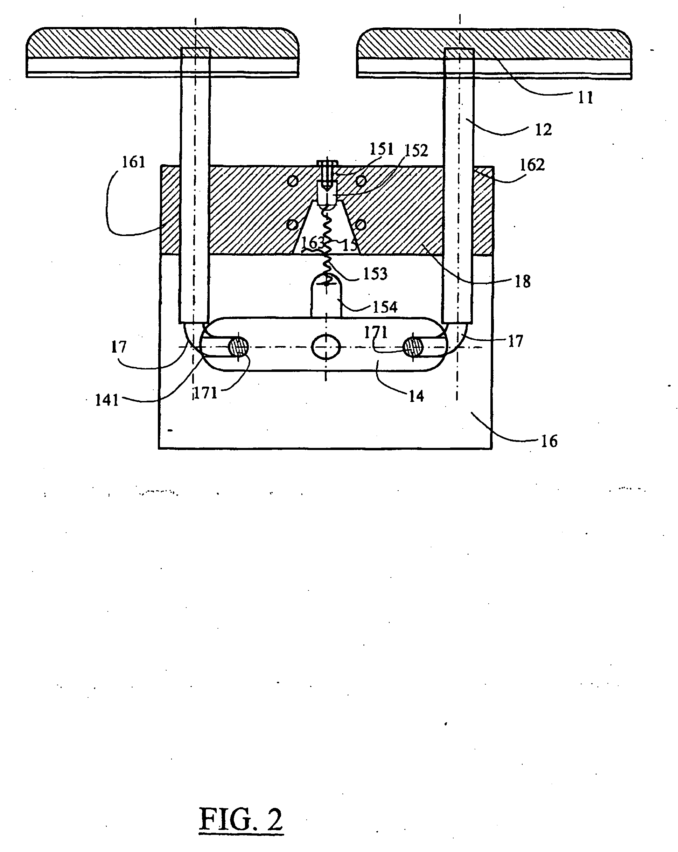

Le système mécanique de la selle articulée 1 représenté à la Fig. 2 comprend un bloc 16 percé de deux trous 161 et 162 permettant le passage de deux pistons 12 et servant de guidage au mouvement en translation des pistons 12. Les extrémités 17 des pistons 12 sont des tiges courbées 17 terminées par des ronds 171 qui se trouvent logés, pour pouvoir y glisser, dans des rainures oblongues 141 d'une bielle 14. Le bloc 16 est prévu de manière à former une butée 18 permettant de limiter en translation le mouvement de translation des pistons 12. Les deux pistons 12 sont quant à eux reliés l'un à l'autre par l'intermédiaire de la bielle 14 articulée en son centre selon un axe normal au plan contenant les deux pistons 12.

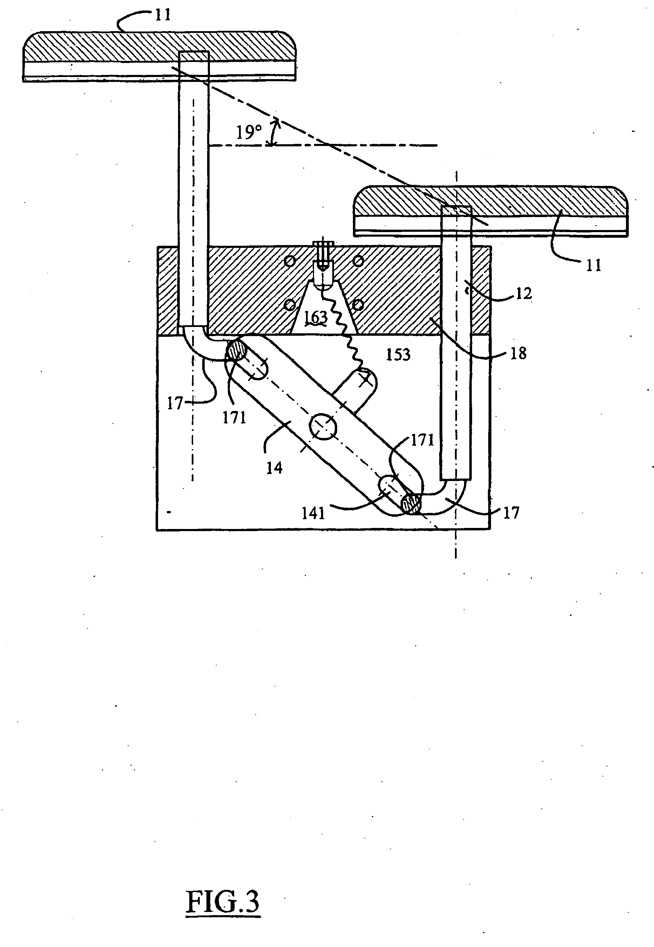

Lorsque la selle 1 se trouve en une position de repos, telle qu'illustrée à la Fig. 2, les ronds 171 des tiges courbées 17 des pistons 12 sont logés du côté intérieur des rainures oblongues 141 de la bielle 14. Par contre, lors du pédalage, et comme représenté à la Fig. 3, les ronds 171 des extrémités des pistons 12 glissent jusqu'aux côtés extérieurs des rainures oblongues 141, permettant ainsi à un des sièges 11 d'atteindre une position haute, et à l'autre siège 11, d'atteindre une position basse. Les sièges en position haute et l'autre en position basse, le décalage angulaire maximal des sièges 11 est obtenu lorsque la bielle 14 entre en butée contre la butée 18. Ce décalage maximal est dans un exemple de réalisation préférentiel de 19°. Cette configuration permet d'accompagner sans contrainte le déhanchement naturel maximum de 38° du bassin osseux de l'utilisateur.

Avantageusement, le système mécanique peut comporter un moyen de rappel 15 des sièges 11 dans la position de repos, comme illustré à la Fig. 2. Ce moyen de rappel. 15 est constitué, par exemple, d'une plaque 152 montée dans une cavité 163 du bloc 16 et reliée à une vis de réglage 151 et d'un ressort 153 reliant la plaque 152 à un bras de levier 154 montée sur la bielle 14.

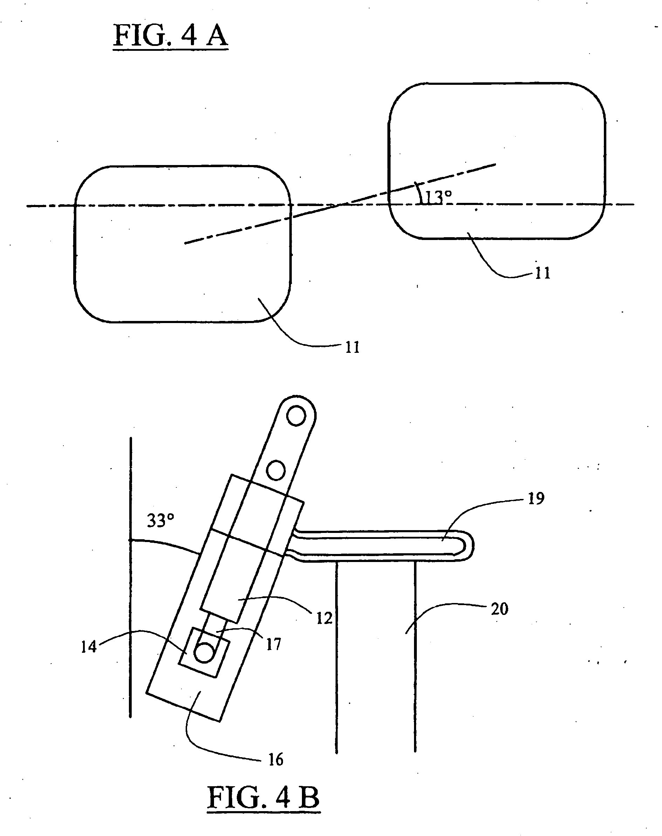

Le système mécanique de la selle articulée 1 comporte un bras de montage 19, par exemple solidaire du bloc 16, prévu pour être monté sur une tige de selle 20 de vélo de manière à ce que ladite direction de translation des deux sièges 11 soit inclinée de 33° vers l'avant du vélo par rapport à la verticale du vélo (voir Fig. 4 B). Cet angle de 33° correspond à l'angle de la direction de coulissement des pistons 12 par rapport à la verticale du vélo. Ainsi, lorsque l'on observe la selle vue du dessus comme sur la Fig. 4A et lorsque l'un des sièges 11 se trouve en position haute et l'autre en position basse, on obtient un décalage angulaire des sièges de 13°. Cette configuration permet d'accompagner la rotation naturelle maximum de 26° du bassin osseux de l'utilisateur.

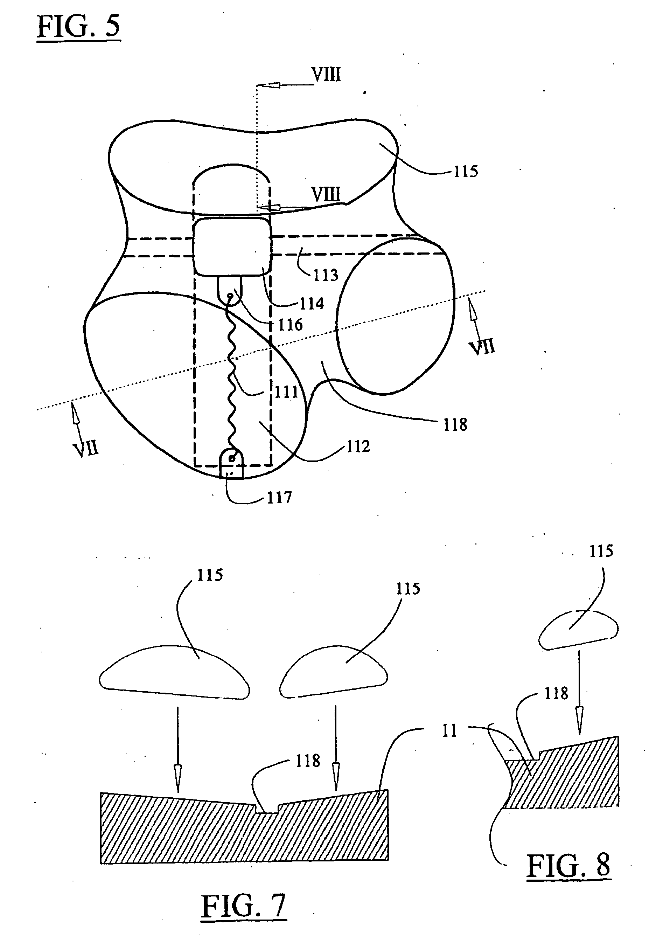

Avantageusement, chaque siège 11 est monté sur une barre de pivot 113 maintenue en place sur le piston 12 par un bloc de pivot 114 (voir Fig. 5). Ainsi, chaque siège 11 de la selle articulée 1 peut pivoter autour de l'axe transversal et perpendiculaire à ladite direction de translation. Cette caractéristique permet de conserver une assiette horizontale quel que soit le dénivelé du terrain.

Chaque siège 11 peut comporter, de plus, un ressort 111, fixé à l'avant du siège 11 et au bloc de pivot 114 par l'intermédiaire de deux plaques 116 et 117. Le ressort est de préférence entouré d'une gaine de protection 112. Ledit ressort 111 est utilisé à la fois comme tendeur et comme moyen de rappel en position de repos lorsque l'utilisateur se lève de la selle. En outre, chaque siège 11 comporte plusieurs points d'appui 115, par exemple trois, en forme de haricot et surélevés par rapport à une surface de base 118, et disposés l'un à l'arrière, un autre sur le côté et l'autre à l'avant du siège 11, comme l'illustrent les deux coupes sur les Fig. 7 et 8. Ces points d'appui sont prévus pour recevoir les parties des ischions de l'utilisateur qui reposent sur les sièges. Ainsi, chaque siège 11 est conçu de manière à offrir une assiette moulée offrant à chaque ischion plusieurs points d'appui 115 permettant ainsi une assise sûre et confortable.

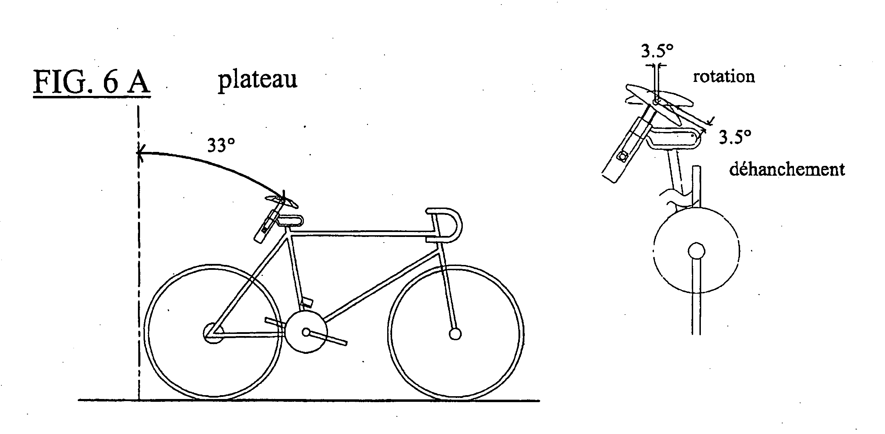

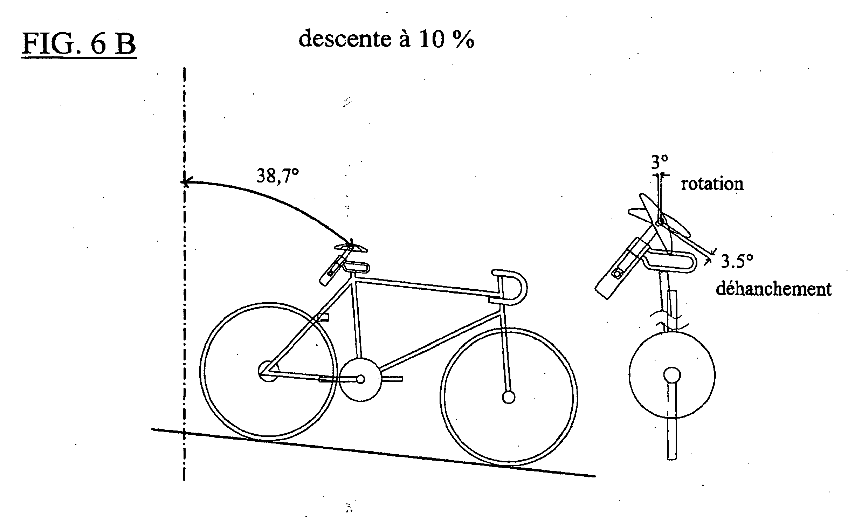

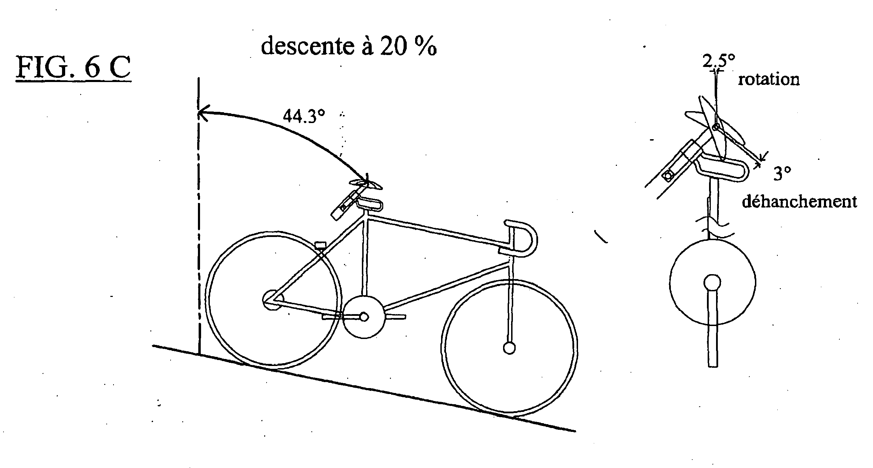

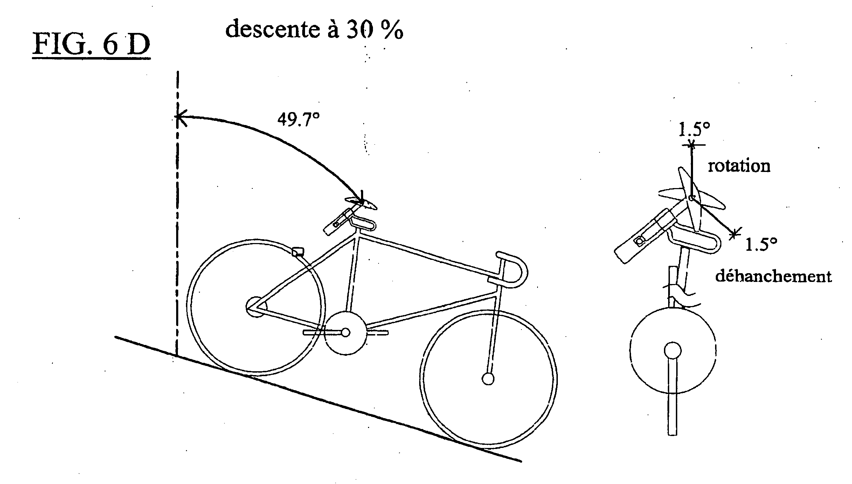

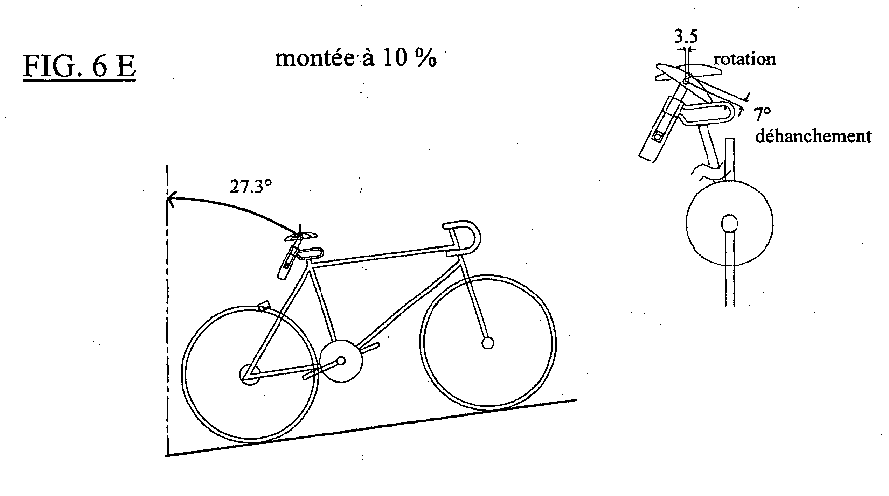

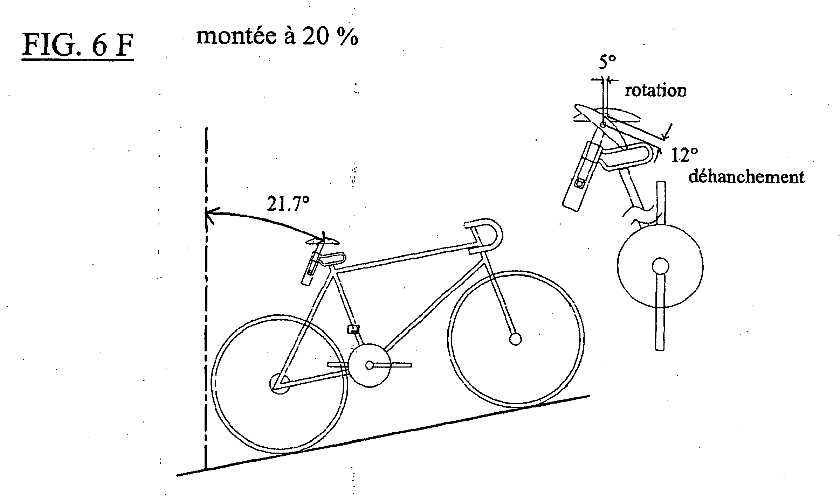

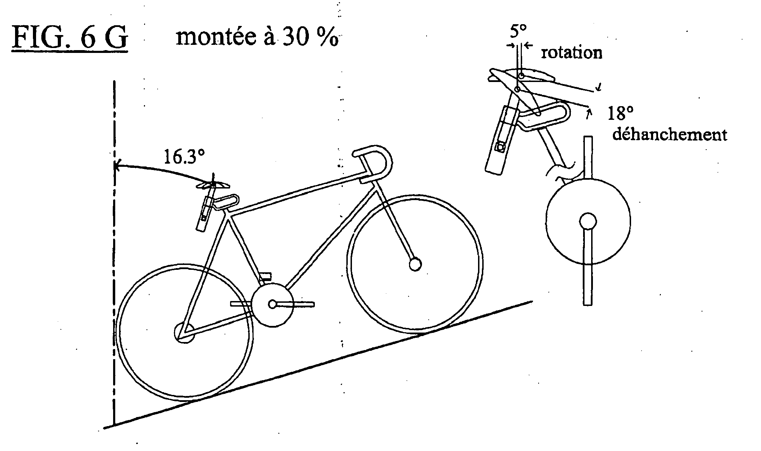

Le tableau 1 présente un exemple de relevés de mesures du déhanchement et de la rotation du bassin osseux effectuées sur un utilisateur de la selle articulée 1 selon l'invention, ladite selle étant montée sur un vélo équipé de pédales, comme représenté aux Figs. 6A à G. Cette série de mesure a été effectuée sur différents types de terrains, tels qu'un plateau (Fig.6 A), une pente à 10 % (Fg. 6 B), une pente à 20% (Fig. 6 C), une pente à 30% (Fig. 6 D), une montée à 10% (Fig. 6 E), une montée à 20% (Fig. 6 F), et une montée à 30% (Fig. 6 G). Les valeurs des mesures peuvent varier d'un utilisateur à l'autre, et sont dépendantes de la morphologie de l'utilisateur, de la souplesse du bassin et des vertèbres. Elles sont aussi fonction, par exemple, de l'âge, de l'habitude de la pratique sportive, de malformation osseuse, etc. Les angles de dénivelé sont indiqués sur la première ligne, les angles d'inclinaison de la selle par rapport à la verticale du terrain plat sont indiqués sur la deuxième ligne, les angles de déhanchement du bassin sont indiqués sur la troisième ligne et les angles de rotation du bassin sont indiqués sur la quatrième ligne. En se référant à l'angle de la selle articulée 1 montée sur le vélo qui est de 33° par rapport à la verticale du terrain (Fig. 6 A), on observe que pour une pente de 10% l'angle augmente jusqu'à une valeur de 38,7° (Fig. 6 B), pour une pente de 20% l'angle augmente jusqu'à une valeur de 44,3° (Fig. 6 C) et pour une pente de 30% l'angle augmente jusqu'à une valeur de 49,7° (Fig. 6 D), alors que les deux sièges maintiennent une position moyenne horizontale grâce à la rotation des sièges autour de l'axe transversal et perpendiculaire à ladite direction de translation. De ce fait, la position de la selle articulée 1 se trouve de plus en plus rapprochée de l'axe des pédales au fur et à mesure que la valeur de l'angle augmente. Inversement, pour une montée de 10% l'angle diminue jusqu'à une valeur de 27,3° (Fig. 6 E), pour une montée de 20% l'angle diminue jusqu'à une valeur de 21,7° (Fig. 6 F) et pour une montée de 30% l'angle diminue jusqu'à une valeur de 16,3° (Fig. 6 G), alors que les deux sièges maintiennent une position moyenne horizontale grâce à la rotation des sièges autour de l'axe transversal et perpendiculaire à ladite direction de translation. De ce fait, la position de la selle articulée 1 se trouve de plus en plus éloignée de l'axe des pédales au fur et à mesure que la valeur de l'angle diminue. Il est ainsi possible de conserver une assiette moyenne horizontale, quel que soit le dénivelé du terrain.

Les valeurs des angles de déhanchement et de rotation du bassin mesurées selon la configuration du terrain sont données pour un utilisateur en particulier et peuvent varier en fonction de l'effort musculaire fourni. Si l'on observe les valeurs des angles obtenues pour les montées et les descentes, on remarque que la valeur maximale de l'angle de déhanchement du bassin de 38° n'est jamais atteinte, même pour une montée de 30% (valeur de l'angle 18°). De même, la valeur maximale de l'angle de rotation du bassin de 26° n'est jamais atteinte, même pour une montée de 30% (valeur de l'angle 5°).

Ces valeurs confirment l'efficacité du système mécanique de la selle articulée selon l'invention pour diminuer les contraintes physiques exercées sur le corps humain lors des phases de pédalage et ce quelle que soit la configuration du terrain.

Il apparaît clairement à partir de la description de l'invention, que la selle articulée selon l'invention permet d'améliorer de façon efficace le confort de l'utilisateur puisqu'elle permet de diminuer les contraintes physiques exercées au niveau du bassin de l'utilisateur, tout en procurant une assise confortable quel que soit le dénivelé du terrain.

**Tableau 1**

| | | | | | | | |
|---|---|---|---|---|---|---|---|
| Configuration du terrain | 0% | -10% | -20% | -30% | +10% | +20% | +30% |
| Angle de dénivelé | 0° | -5.7° | -11.3° | -16.7 | 5.7° | 11.3° | 16.7 |
| Angle de selle | 33° | 38.7° | 44.3° | 49.7° | 27.3° | 21.7° | 16.3° |
| Déhanchement du bassin | 3.5° | 3.5° | 3° | 1.5° | 7° | 12° | 18° |
| Rotation du bassin | 3.5° | 3° | 2.5° | 1.5° | 3.5° | 5° | 5° |

## Revendications

1. Selle (1) pour vélo, ladite selle (1) étant du type comportant deux sièges (11), lesdits sièges (11) sont reliés l'un à l'autre par un système mécanique prévu pour que lesdits sièges (11) se déplacent selon un mouvement en translation alterné dans une direction de translation sensiblement normale au plan contenant lesdits sièges (11), **caractérisée en ce que** ledit système mécanique est prévu pour être monté sur ledit vélo de manière à ce que ladite direction de translation soit inclinée de 33° vers l'avant du vélo par rapport à la verticale du vélo.

2. Selle (1) pour vélo selon la revendication 1, **caractérisée en ce que** ledit système mécanique est constitué de deux pistons (12) coulissants dans des directions parallèles entre elles et ladite direction de translation, et qui sont reliés l'un à l'autrc par l'intermédiaire d'une bielle (14) articulée en son centre selon un axe normal au plan contenant les deux pistons (12).

3. Selle (1) pour vélo selon la revendication 2, **caractérisée en ce que** ledit système mécanique comporte une butée (18) prévue pour arrêter ladite bielle (14) de manière à limiter le mouvement en translation alterné des deux sièges (11).

4. Selle (1) pour vélo selon l'une des revendications précédentes, **caractérisée en ce que** ledit système mécanique comporte un moyen de rappel (15) des sièges (11) en une position de repos.

5. Selle (1) pour vélo selon la revendication 4, **caractérisée en ce que** ledit moyen de rappel (15) des sièges (11) en une position de repos est constitué d'un ressort (153).

6. Selle (1) pour vélo selon l'une des revendications précédentes, **caractérisée en ce que** la selle (1) comporte un système mécanique permettant un mouvement de rotation des deux sièges (11) autour d'un axe transversal et perpendiculaire à ladite direction de translation.

7. Selle (1) pour vélo selon l'une des revendications précédentes, **caractérisée en ce que** chaque siège (11) comporte un ressort (111) permettant le rappel du siège (11) en une position de repos.

8. Selle (1) pour vélo selon la revendication 7, **caractérisée en ce que** ledit ressort permettant le rappel du siège (11) en une position de repos est entouré d'une gaine de protection.

9. Selle pour vélo selon l'une des revendications précédentes, **caractérisée en ce que** chaque siège (11) comporte plusieurs points d'appui (115).

## Claims

1. Saddle (1) for a bicycle, the said saddle (1) being of the type which comprises two seats (11), the said seats (11) are connected to one another by a mechanical system which is intended to enable the said seats (11) to move in an alternating movement in translation in a direction of translation which is substantially normal to the plane in which the said seats (11) lie, **characterised in that** the said mechanical system is intended to be mounted on the said bicycle in such a way that the said direction of translation is inclined at 33° towards the front of the bicycle relative to the vertical of the bicycle.

2. Saddle (1) for a bicycle according to claim 1, **characterised in that** the said mechanical system is formed by two pistons (12) which slide in mutually parallel directions and in the said direction of translation and which are connected together by means of a connecting bar (14) which hinges at its centre on an axis normal to the plane in which the two pistons (12) lie.

3. Saddle (1) for a bicycle according to claim 2, **characterised in that** the said mechanical system comprises a stop (18) which is intended to stop the said connecting bar (14) in such a way as to limit the alternating movement in translation of the two seats (11).

4. Saddle (1) for a bicycle according to one of the foregoing claims, **characterised in that** the said mechanical system comprises a means (15) for returning the seats (11) to a rest position.

5. Saddle (1) for a bicycle according to claim 4, **characterised in that** the said means (15) for returning the seats (11) to a rest position is formed by a spring (153).

6. Saddle (1) for a bicycle according to one of the foregoing claims, **characterised in that** the saddle (1) comprises a mechanical system which permits a rotary movement of the two seats (11) on a transverse axis which is perpendicular to the said direction of translation.

7. Saddle (1) for a bicycle according to one of the foregoing claims, **characterised in that** each seat (11) comprises a spring (111) which enables the seat (11) to be returned to a rest position.

8. Saddle (1) for a bicycle according to claim 7, **characterised in that** the said spring (111) which enables the seat (11) to be returned to a rest position is surrounded by a protective sheath.

9. Saddle (1) for a bicycle according to one of the foregoing claims, **characterised in that** each seat (11) comprises a plurality of supporting points (115).

## Patentansprüche

1. Fahrradsattel (1) mit zwei. Sitzen (11), wobei die Sitze (11) mittels eines mechanischen Systems miteinander verbunden sind, das dazu dient, dass sich die Sitze (11) entsprechend einer abwechselnden Verschiebebewegung in einer Verschieberichtung senkrecht zu der Ebene, welche die Sitze (11) umfasst, verschieben, **dadurch gekennzeichnet, dass** das mechanische System dazu bestimmt ist, auf das Fahrrad montiert zu werden, derart, dass die Verschieberichtung in Bezug auf die Senkrechte des Fahrrades um 33° in Vorwärtsrichtung des Fahrrades geneigt ist.

2. Fahrradsattel (1) nach Anspruch 1, **dadurch gekennzeichnet, dass** das mechanische System aus zwei Kolben (12) besteht, welche in zueinander parallelen Richtungen und in der Verschieberichtung gleiten, und welche mittels einer PJ.euelstange (14) untereinander verbunden sind, die in ihrer Mitte entsprechend einer Normalachse auf der die beiden Kolben (12) enthaltenden Ebene angelenkt ist.

3. Fahrradsattel (1) nach Anspruch 2, **dadurch gekennzeichnet, dass** das mechanische System einen Anschlag (18) umfasst, der dazu bestimmt ist, die Pleuelstange (14) zu stoppen, um die abwechselnde Verschiebebewegung der beiden Sitze (11) zu begrenzen.

4. Fahrradsattel (1) nach einem der vorhergehenden Ansprüche, **dadurch gekennzeichnet, dass** das mechanische System ein Rückstellmittel (15) umfasst, welches die Sitze (11) in eine Ruhestellung zurückstellt.

5. Fahrradsattel (1) nach Anspruch 4, **dadurch gekennzeichnet, dass** das Rückstellmittel (15) der Sitze (11) in eine Ruhestellung aus einer Feder (153) besteht.

6. Fahrradsattel (1) nach einem der vorhergehenden Ansprüche, **dadurch gekennzeichnet, dass** der Sattel (1) ein mechanisches System umfasst, welches eine Drehbewegung der beiden Sitze (11) um eine quer verlaufend und senkrecht zur Verschieberichtung angeordnete Achse gestattet.

7. Fahrradsattel (1) nach einem der vorhergehenden Ansprüche, **dadurch gekennzeichnet, dass** jeder Sitz (11) eine Feder (111) umfasst, welche die Rückstellung des Sitzes (11) in eine Ausgangsstellung gestattet.

8. Fahrradsattel (1) nach Anspruch 7, **dadurch gekennzeichnet, dass** die Feder, welche die Rückstellung des Sitzes (11) in eine Ausgangsposition gestattet, von einer Schutzhülle umgeben ist.

9. Fahrradsattel nach einem der vorhergehenden Ansprüche, **dadurch gekennzeichnet, dass** jeder Sitz (11) mehrere Auflagestellen (115) umfasst.
